# EUROPÄISCHE PATENTSCHRIFT

(11) **EP 4 030 205 B1**
(45) Veröffentlichungstag und Bekanntmachung des Hinweises auf die Patenterteilung: **14.08.2024**
(21) Anmeldenummer: 21152376.6
(22) Anmeldetag: 19.01.2021
(51) Int. Cl.: G02B 6/02

(54) **ANTIRESONANTES OPTISCHES BAUTEIL UND VERFAHREN FÜR SEINE HERSTELLUNG**
ANTIRESONANT OPTICAL COMPONENT AND METHOD OF MANUFACTURING THE SAME
COMPOSANT OPTIQUE ANTIRÉSONANT ET SON PROCÉDÉ DE FABRICATION

(43) Veröffentlichungstag der Anmeldung: 20.07.2022
(73) Patentinhaber: Heraeus Quarzglas GmbH & Co. KG, 63450 Hanau (DE)
(72) Erfinder: ROSENBERGER, Manuel, 63450 Hanau (DE); PLASS, Jaqueline, 63450 Hanau (DE)
(74) Vertreter: Staudt, Armin Walter

(56) Entgegenhaltungen:
- CN-A- 110 579 836
- FR-A1- 3 006 774
- GB-A- 2 583 352

## Beschreibung

### Technischer Hintergrund

Die Erfindung liegt auf dem Gebiet der Antiresonanten Hohlkernfasern und der Vorformen zum Ziehen Antiresonanter Hohlkernfasern.

Insbesondere geht es bei der Erfindung um ein antiresonantes optisches Bauteil, das einen sich entlang einer Bauteil-Längsachse erstreckenden Hohlkern, einen den Hohlkern umgebenden Mantel mit einer dem Hohlkern zugewandten umlaufenden Innenseite sowie Antiresonanzelemente aufweist.

Außerdem geht es bei der Erfindung um ein Verfahren zur Herstellung eines antiresonanten optischen Bauteils.

Herkömmliche Monomode-Lichtleitfasern haben einen Kernbereich aus Vollmaterial, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Im Gegensatz dazu ist bei einer "Antiresonanten Hohlkernfaser" ("antiresonant hollow-core fibers"; ARHCF) ein hohler Kernbereich vorgesehen, der von einem Mantelbereich umgeben ist, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den hohlen Faserkern leiten.

Potentielle Anwendungen dieser Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Hohlkernfasern ermöglichen außerdem präzisionsspektroskopische Untersuchungen an im Hohlkern befindlichen Medien (Gase oder Flüssigkeiten). Da das im Kern geführte Licht zu einem großen Teil mit dem zu untersuchenden Medium überlappt, können auch Konzentrationen im ppm-Bereich detektiert werden. Daneben kommt auch der Einsatz in optischen Atomuhren, Quantencomputern und der Fluoreszenzmikroskopie in Betracht.

### Stand der Technik

Antiresonante Hohlkernfasern haben häufig eine vergleichsweis hohe Dämpfung. Dies ist darauf zurückzuführen, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Im radialen Querschnitt (in Richtung der Hohlkernfaser-Längsachse gesehen) haben die antiresonanten Strukturelemente in der Regel Kreis- oder Ovalform. Um den Dämpfungsverlust weiter zu verringern, wurden in jüngerer Zeit Antiresonante Hohlkernfasern mit einem Design vorgeschlagen, bei dem der Hohlkern von einer inneren Mantelschicht umgeben ist, in der antiresonante Strukturelemente angeordnet sind, die von der Kreis oder Ovalform abweichen und beispielsweise einen Teilkreis (Kreisbogen, Halbkreis) oder ein Teil-Oval oder daraus abgeleitete Strukturen bilden.

So beschreiben beispielsweise Yang Chen, Mohammed F. Saleh, Nicolas Y. Joly und Fabio Biancalana im Paper "Low-loss single-mode negatively curved squarecore hollow fibers" in Optics Letters Vol. 42, Issue 7, pp. 1285-1288 (2017); DOI: 10.1364/OL.42.001285, eine neuartige antiresonante Hohlkernfaser aus Quarzglas, bei der innerhalb eines Innerohres vier augenähnliche hohle Mantelbereiche ausgebildet sind, die um den Hohlkern gleichmäßig verteilt sind. Der Hohlkern weist dabei eine negativ gekrümmte annähernd quadratische Form auf.

Aus der CN 111474627 A ist eine Antiresonanz-Hohlkernfaser bekannt, bei der der Hohlkern von einem Mantel umgeben ist. Im Querschnitt in Richtung der Faserlängsachse gesehen hat die Faser einen dem Hohlkern zugewandten inneren Bereich, um den fünf geschlossene und voneinander beabstandete Strukturelemente gleichmäßig in Umfangsrichtung verteilt sind. Jedes der Strukturelemente bildet einen Hohlraum, der ein weiteres kreisförmiges oder kreissektorförmiges Strukturelement einschließt, das mit der Mantel-Innenseite verbunden ist.

Die GB 2 583 352 A offenbart eine Vorform für antiresonante optische Hohlkernfasern mit bogenförmig nach innen gewölbten Antiresonanzelementen, deren Bogenenden an Kontaktstellen mit der Hüllrohr-Innenseite verbunden sind und mit dieser eine Wölbungsfläche aufspannen. Es sind auch Doppelbögen beschrieben, die als *"nested arrangements"* bezeichnet werden. Für die Herstellung der Antiresonanzelemente werden profilierte Glasrohre (*"shaped tubes"*) in ein Hüllrohr eingesetzt. Das Profil hat gerade Längenabschnitte, verbunden mit gebogenen Längenabschnitten. Die geraden Längenabschnitte liegen an der Hüllrohr-Wandung an. Bei verschachtelten Profilrohren liegt der gerade Längenabschnitt des inneren Profilrohres am geraden Längenabschnitt des äußeren Profilrohres an.

Die CN 110 579 836 B beschreibt eine Vorform für eine Hohlkern-Lichtleitfaser mit mehreren Resonanzschichten, umfassend ein Hüllrohr und Antiresonanzelemente einer ersten Art, die bogenförmig nach innen gewölbt sind, sowie Antiresonanzelementen einer zweiten Art, die rechteckig sind und innerhalb der von der Wölbungsfläche begrenzten Wölbungs-Innenraums angeordnet sind. Die Enden der bogenförmigen und der rechteckigen Antiresonanzelemente sind mit der Hüllrohr-Innenwand verbunden. Die Antiresonanzelemente bilden zusammen und mit dem Hüllrohr eine Vielzahl unterschiedlich geformter Hohlräume mit niedrigerem Brechungsindex. Die Herstellung erfolgt nach der "stack-and-draw-Methode".

Bei der aus der FR 3 006 774 A1 bekannten Hohlkern-Lichtleitfaser ist der Hohlkern von einer geschlossenen Kontur begrenzt, die eine Reihe von Bögen mit negativer Krümmung umfasst, wobei sich kleine Bögen und große Bögen abwechseln. Die Herstellung der Fasern erfolgt durch die "stack-and-draw-Methode", indem Kapillaren mit kreisförmigem Querschnitt hergestellt, angeordnet und elongiert werden. Die Kontur des Kerns wird durch die Optimierung der rheologischen Materialparameter, der Temperaturen und der Druckunterschiede zwischen den Kapillaren während der Ziehphase erreicht.

### Technische Aufgabenstellung

Gemäß dem oben zitierten Paper von Yang Chen et al. wird durch die negative Krümmung eine Kopplung zwischen Kernmoden höherer Ordnung und Mantelmoden ermöglicht und der Dämpfungsverlust verringert, indem das Modenfeld so weit wie möglich von den Knoten im Bereich der vier Ecken entfernt wird.

Gemäß der CN 111474627 A wird der Übertragungsverlust der Antiresonanten Hohlkernfaser durch die innovative optische Faserstruktur reduziert, und der Lichtverlust wird verhindert, so dass die optische Faser einen niedrigen Übertragungsverlust und sogar einen ultraniedrigen Übertragungsverlust von weniger als 0,1 dB/km aufweist.

Allerdings beruhen bei beiden Dokumenten die Angaben oder Annahmen zur Dämpfung auf Simulationen, nicht auf Messungen. Eine Methode zur Herstellung der Antiresonanten Hohlkernfasern wird nicht angegeben.

Ziel der Erfindung ist es daher, ein optisches Bauteil in Form einer Antiresonanten Hohlkernfaser oder einer Vorform dafür bereitzustellen, mit einem Design, das im radialen Querschnitt einen Hohlkern aufweist, der von einer inneren Mantelschicht umgeben ist, in der antiresonante Strukturelemente angeordnet sind, die von der Kreisform abweichen.

Außerdem liegt der Erfindung die Aufgabe zugrunde, ein Verfahren zur Herstellung eines derartigen optischen Bauteils (Antiresonante Hohlkernfaser beziehungsweise Vorform zum Ziehen der Hohlkernfaser) zur Verfügung zu stellen.

### Zusammenfassung der Erfindung

Hinsichtlich des antiresonanten optisches Bauteils wird diese Aufgabe erfindungsgemäß durch ein Bauteil mit den Merkmalen von Anspruch 1 gelöst.

Bei dem antiresonanten optischen Bauteil (kurz: Bauteil) handelt es sich um eine Antiresonanten Hohlkernfaser (kurz: Hohlkernfaser) oder um eine Vorform für eine Antiresonante Hohlkernfaser (kurz: Vorform). In seinem radialen Querschnittsdesign zeichnet es sich dadurch aus, dass mindestens ein Teil der Antiresonanzelemente keine geschlossene Kreis- oder Ovalform, sondern "Bogenform" haben, wobei die beiden "freien" Bogenenden an der Mantel-Innenseite angeheftet sind (aber nicht miteinander verbunden sind). Dieses Design wird im Folgenden auch als "Bogen-Design" bezeichnet, zur sprachlichen Unterscheidung zum üblichen "Kreis- oder Oval-Design".

Die Antiresonanzelemente der ersten Art sind im Querschnitt bogenförmig ausgestaltet und schließen zusammen mit der Mantel-Innenseite eine Wölbungsfläche mit einer Auswölbung in Richtung des Hohlkerns ein. Die Wölbungsfläche ist spiegelsymmetrisch bezüglich einer Spiegelachse, die durch den Bogenscheitel und die Verbindungslinie der Bogenenden verläuft, wobei die Verbindungslinie der Bogenenden im betrachteten Querschnitt von der Mantel-Innenseite gebildet wird und deren Radius hat.

Die Anzahl der Bögen beträgt beispielsweise vier, bevorzugt zwischen fünf und zehn, wobei die Bögen um die Innenseite des Mantels gleichmäßig verteilt sind.

Das "Bogen-Design" ist geeignet, Dämpfungsverluste im Vergleich zu den üblichen "Kreis- oder Oval-Designs" mit ring- oder ovalförmig geschlossenen Antiresonanzelementen zu verringern.

Eine weitere Verbesserung in dieser Hinsicht ergibt sich, indem erfindungsgemäß eine zweite Art von Antiresonanzelementen vorgesehen ist, wobei Antiresonanzelemente der zweiten Art mit Antiresonanzelementen der ersten Art in dem Sinne verschachtelt sind, dass im Querschnitt in Richtung der Bauteil-Längsachse gesehen jeweils mindestens ein Antiresonanzelement der zweiten Art innerhalb der Wölbungsfläche angeordnet ist. Die Antiresonanzelemente der ersten und zweiten Art haben die gleiche Grundgeometrie, oder sie haben unterschiedliche Grundgeometrien (beispielsweise einerseits bogenförmig andererseits oval oder kreisrund). In jedem Fall ergeben die Antiresonanzelemente der zweiten Art einen zusätzlichen Design-Freiheitsgrad.

Dabei hat es sich als besonders vorteilhaft erwiesen, wenn die verschachtelten Antiresonanzelemente der zweiten Art jeweils mit der Mantel-Innenseite verbunden sind.

Bei Hohlkernfasern oder -vorformen mit "Oval-Design" sind Antiresonanzelemente bekannt, die sich aus mehreren, miteinander verschachtelten Strukturelementen zusammensetzen, beispielsweise einer Innen-Kapillare, die an der Innenwandung einer Außen-Kapillare angeschmolzen ist. Beim Faserziehprozess wird dieser Verbund erweicht und elongiert, wobei es zu gegenseitigen Beeinflussungen der Kapillaren infolge der Oberflächenspannung und zu unerwünschten Verformungen kommen kann. Diese Verformungen werden verhindert, wenn das verschachtelte Antiresonanzelement der zweiten Art mit der Mantel-Innenseite verbunden ist, und mit dem bogenförmigen Antiresonanzelement der ersten Art keinen Kontakt hat.

Erfindungsgemäß sind die verschachtelten Antiresonanzelemente der zweiten Art im Querschnitt in Richtung der Bauteil-Längsachse gesehen jeweils kreisrund oder oval ausgebildet.

Sie tragen zur Kopplung von Kernmoden höherer Ordnung an die im Mantel geführten Lichtmoden bei, wodurch sie zu Gunsten der Energie und Ausbreitung der fundamentalen Kernmode unterdrückt werden.

Bei einer bevorzugten Ausführungsform des optischen Bauteils sind mindestens vier Antiresonanzelemente der ersten Art um die Mantel-Innenseite gleichmäßig verteilt, wobei die Bogenenden benachbarter Antiresonanzelemente der ersten Art Kontakt miteinander haben.

Durch den Kontakt der Bogenenden benachbarter Antiresonanzelemente gelingt es auf einfache Art und Weise, die Mantel-Innenseite vollkommen abzudecken, so dass aus Richtung des Hohlkerns gesehen keine reflektierende Fläche mit positiver, konkaver Krümmung vorhanden ist, die die Antiresonanzbedingungen beeinträchtigen könnte.

Bei einer anderen bevorzugten Ausführungsform des optischen Bauteils sind mindestens vier Antiresonanzelemente der ersten Art um die Mantel-Innenseite gleichmäßig verteilt, wobei die Bogenenden benachbarter Antiresonanzelemente der ersten Art keinen Kontakt miteinander haben.

Überlappungen von Antiresonanzelementen der ersten Art können zu sogenannten "Knoten" führen, die die Übertragungseigenschaften der mikrostrukturierten optischen Faser stören und damit zu Dämpfungsverlusten führen. Derartige Knoten werden zuverlässig vermieden, indem die Kontaktstellen der Bogenenden benachbarter Antiresonanzelemente keinen Kontakt miteinander haben.

Um die konkaven Flächen der Mantel-Innenseite vollkommen abzudecken, sind bei einer bevorzugten Weiterbildung dieser Ausführungsform Antiresonanzelemente einer dritten Art vorgesehen, wobei zwischen benachbarten Antiresonanzelementen der ersten Art jeweils mindestens ein Antiresonanzelement der dritten Art angeordnet ist, das mit den benachbarten Antiresonanzelementen der ersten Art und mit der Mantel-Innenseite verbunden ist.

Die Antiresonanzelemente der dritten Art haben aus Richtung des Hohlkerns gesehen beispielsweise eine negative Krümmung (konvex) oder keine Krümmung (plan, gerade). Sie decken zusammen mit den Antiresonanzelementen der ersten Art die Mantel-Innenseite vollständig ab, so dass diese die Antiresonanzbedingungen nicht beeinträchtigt.

Bei einer weiteren bevorzugten Ausführungsform des optischen Bauteils sind die Antiresonanzelemente der ersten Art im Querschnitt in Richtung der Bauteil-Längsachse gesehen in Form eines äußeren Bogens und eines verschachtelten inneren Bogens mit jeweils einem linken Bogenende und mit einem rechten Bogenende und mit einer Auswölbung in Richtung des Hohlkerns ausgebildet, wobei jeweils die linken Bogenenden des verschachtelten inneren Bogens und des äu-ßeren Bogens, und jeweils die rechten Bogenenden des verschachtelten inneren Bogens und des äußeren Bogens miteinander verbunden sind.

Im radialen Querschnitt gesehen, bilden die Antiresonanzelemente der ersten Art hier Doppelbögen, wobei jeweils der verschachtelte innere Bogen innerhalb der Wölbungsfläche des äußeren Bogens angeordnet ist. Die gemeinsame Verbindungslinie der Bogenenden des Doppelbogens wird bei dieser Betrachtung jeweils von der Mantel-Innenseite gebildet, wobei der Bogen-Scheitel auf einer geraden Linie liegen, die vom Mittelpunkt des optischen Bauteils (der Bauteil-Längsachse) ausgehend in radialer Richtung verläuft. Der innere Bogen hat dabei eine geringere Krümmung (und damit einen größeren Radius) als der äußere Bogen.

Dadurch, dass die "freien" Bogenenden benachbarter Doppelbögen in Kontakt miteinander sind, wird die konvexe Mantel-Innenseite vollständig von den Doppelbögen überdeckt, so dass diese die Antiresonanzbedingungen nicht beeinträchtigt. Vorzugsweise sind vier bis zehn Doppelbögen um die Mantel-Innenseite gleichmäßig verteilt.

Hinsichtlich des Verfahrens zur Herstellung eines antiresonanten optischen Bauteils wird die weiter oben angegebene technische Aufgabe erfindungsgemäß durch ein Verfahren mit den Merkmalen von Anspruch 8 gelöst.

Aus den zylinderförmigen Bauteilen, nämlich dem Hüllrohr, mindestens einem ARE-Mutterrohr und mehreren Stützrohren, wird ein Halbzeug in Form eines Zylinder-Ensembles erzeugt, in dem diese Bauteile in vertikaler Ausrichtung lose ineinandergesteckt und an ihren oberen Enden gehalten werden, oder indem alle Bauteile oder einzelne der Bauteil miteinander verbunden sind.

Durch Elongieren und Kollabieren des Zylinder-Ensembles wird eine Vorform erhalten oder die Antiresonanten Hohlkernfaser. In beiden Fällen werden aus dem mindestens einen ARE-Mutterrohr mehrere miteinander verbundene, bogenförmige Antiresonanzelemente erzeugt. Das ARE-Mutterrohr wird zu den ersten Antiresonanzelementen umgeformt. Zur Umformung tragen die Stützrohre bei, indem diese an vorgegebenen Anheftungsstellen der Außenseite des ARE-Mutterrohres ansetzen und diese Anheftungsstellen an vorgegebenen Kontaktstellen der Hüllrohr-Innenseite anheften. Dies geschieht durch einen Anheftungs- und Aufblasvorgang mit folgenden Maßnahmen:
(1) Die Stützrohre werden um den Umfang des Ringspalts zwischen Hüllrohr und dem koaxial dazu angeordneten ARE-Mutterrohr einzeln oder paarweise gleichmäßig verteilt, wobei sie vor dem Kollabieren oder beim Kollabieren des Zylinder-Ensembles Kontakt sowohl mit den Anheftungsstellen der Außenseite des ARE-Mutterrohres als auch mit den Kontaktstellen des Hüllrohres haben oder bekommen. Zwischen benachbarten Stützrohren entsteht dadurch im Ringspalt jeweils ein seitlich geschlossener Hohlkanal. Dessen Begrenzung wird gebildet von dem ARE-Mutterrohr, dem Hüllrohr und den beidseitigen Stützrohren.
(2) Die Stützrohre werden beim Kollabieren des Zylinder-Ensembles selbst vollständig oder teilweise kollabiert, und verlieren in dem Maße ihr anfängliches Volumen. In der Regel sind Stützrohre bevorzugt, die nahezu vollständig verschwinden, und die deshalb eine möglichst geringe Wandstärke haben, beispielsweise weniger als 0,5mm ,
(3) Beim Kollabieren des Zylinder-Ensembles wird an diejenigen Stützrohren, die zum Anheften des ARE-Mutterrohres an den Kontaktstellen des Hüllrohres dienen ein gegenüber dem Umgebungsdruck verringerter Druck (Unterdruck) angelegt.
(4) Beim Kollabieren des Zylinder-Ensembles wird in den Hohlkanälen ein gegenüber dem Umgebungsdruck erhöhter Druck (Überdruck) angelegt, so dass sich das ARE-Mutterrohr zwischen den am Hüllrohr fixierten Anheftungsstellen verformt und bogenförmige Auswölbungen in Richtung auf den Hohlkern aufgeblasen werden.

In der so erzeugten Antiresonanten Hohlkernfaser (oder in der Vorform dafür) sind die ehemaligen Stützrohre somit ganz oder teilweise verschwunden, und das ehemalige ARE-Mutterrohr bildet mehrere Antiresonanzelemente, die jeweils im Querschnitt in Richtung der Bauteil-Längsachse gesehen bogenförmig mit einem linken Bogenende und mit einem rechten Bogenende und mit einer Auswölbung in Richtung des Hohlkerns ausgebildet sind, wobei die Bogenenden an der ehemaligen Mantel-Innenseite fixiert sind und mit dieser eine Wölbungsfläche aufspannen.

Das erfindungsgemäße Verfahren erlaubt nach Kenntnis des Anmelders erstmals die Herstellung einer Antiresonanten Hohlkernfaser oder einer Vorform zum Ziehen einer Antiresonanten Hohlkernfaser, mit einem "Bogen-Design". Neben dem Hüllrohr sind wichtige Ausgangselemente hierfür mindestens ein ARE-Mutterrohr und mehrere Stützrohre.

Bei einer bevorzugten Verfahrensweise werden bei dem gemäß Verfahrensschritt (d) gebildeten Zylinder-Ensemble mindestens vier Stützrohre gleichmäßig im Ringspalt verteilt.

Bei dieser Verfahrensweise kann ein optisches Bauteil mit vier und mehr bogenförmigen Auswölbungen hergestellt werden, bei dem sich benachbarte bogenförmige Auswölbungen ein Stützrohr teilen können. Die benachbarten bogenförmigen Auswölbungen sind dabei an den ehemaligen Stützrohren miteinander verbunden und sie decken die Mantel-Innenseite vollständig ab.

Bei einer anderen bevorzugten Verfahrensweise werden bei dem gemäß Verfahrensschritt (d) gebildeten Zylinder-Ensemble mindestens acht Stützrohre paarweise angeordnet und die Stützrohr-Paare gleichmäßig im Ringspalt verteilt.

Auch bei dieser Verfahrensweise kann ein optisches Bauteil mit vier und mehr bogenförmigen Auswölbungen hergestellt werden, wobei sich benachbarte bogenförmige Auswölbungen kein Stützrohr teilen. Zwischen benachbarten bogenförmigen Auswölbungen kann daher ein Zwischenraum verbleiben, der sich aus dem Abstand der ehemaligen Stützrohre ergibt.

Es hat sich als günstig erweisen, wenn beim Bilden des Zylinder-Ensembles gemäß Verfahrensschritt (d) entweder mindestens ein Teil der Stützrohre an der Mutterrohr-Außenseite oder an der Hüllrohr-Innenseite fixiert ist.

Die Fixierung erfolgt vorab beim Elongieren und Kollabieren des Zylinder-Ensembles, oder sie erfolgt bei einem vorgeschalteten leichten Kollabieren des Hüllrohres. Diese Vorkonfektionierung erleichtert den Zusammenbau des Zylinder-Ensembles und verbessert dessen Maßhaltigkeit.

Eine besonders vorteilhafte Verfahrensvariante zeichnet sich dadurch aus, dass die gemäß Verfahrensschritt (b) bereitgestellten Antiresonanzelement-Vorformlinge mehrere NE-Kapillaren (NE steht dabei für "Nested Element") mit einem Außendurchmesser Dz umfassen, wobei gilt: D_{Z}<D_{S}<D_{M1}, wobei bei dem gemäß Verfahrensschritt (d) gebildeten Zylinder-Ensemble die NE-Kapillaren an der Hüllrohr-Innenseite fixiert sind, und im Ringspalt zwischen Stützrohren und achsenparallel zu diesen angeordnet sind, und wobei beim Elongieren des Zylinder-Ensembles gemäß Verfahrensschritt (e) in den NE-Kapillaren ein Überdruck erzeugt wird, so dass daraus Antiresonanzelemente einer zweiten Art gebildet werden, die mit den Antiresonanzelementen der ersten Art in dem Sinne verschachtelt sind, dass im Querschnitt in Richtung der Bauteil-Längsachse gesehen jeweils mindestens ein Antiresonanzelement der zweiten Art innerhalb der Wölbungsfläche angeordnet ist.

Aus den NE-Kapillaren werden beim Elongieren des Zylinder-Ensembles gemäß Verfahrensschritt (e) Antiresonanzelemente einer zweiten Art gebildet. Diese sind im Querschnitt in Richtung der Bauteil-Längsachse gesehen jeweils innerhalb der Wölbungsfläche angeordnet, die von den Antiresonanzelementen der ersten Art aufgespannt wird. Der anfängliche Außendurchmesser der NE-Kapillaren ist kleiner als der anfängliche Außendurchmesser des ersten ARE-Mutterrohres.

Die NE-Kapillaren sind im gleichen Ringspalt wie die Stützrohre und zwischen diesen angeordnet. Damit die NE-Kapillaren den Anheftungs- und Aufblasvorgang nicht behindern, ist ihr Außendurchmesser auch kleiner als der Außendurchmesser der Stützrohre.

Beim Bilden des Zylinder-Ensembles gemäß Verfahrensschritt (d) sind die NE-Kapillaren vorzugsweise an der Hüllrohr-Innenseite fixiert. Die Fixierung erfolgt vorab beim Elongieren und Kollabieren des Zylinder-Ensembles, oder sie erfolgt bei einem vorgeschalteten leichten Kollabieren des Hüllrohres. Diese Vorkonfektionierung erleichtert den Zusammenbau des Zylinder-Ensembles und verbessert dessen Maßhaltigkeit.

Beim Elongieren und Kollabieren des Zylinder-Ensembles wird in den NE-Kapillaren ein gegenüber dem Umgebungsdruck erhöhter Druck (Überdruck) erzeugt wird, so dass sie zu den Antiresonanzelementen der zweiten Art aufgeblasen werden. Sie sind daher im Wesentlichen (im radialen Querschnitt) kreis- oder ovalförmig.

Bei einer weiteren vorteilhaften Verfahrensvariante umfassen die gemäß Verfahrensschritt (b) bereitgestellten Antiresonanzelement-Vorformlinge mindestens ein zweites ARE-Mutterrohr mit einem Außendurchmesser D_{M2}, wobei gilt: D_{S}<D_{M2}<D_{M1}, und wobei beim gemäß Verfahrensschritt (d) gebildeten Zylinder-Ensemble das zweite ARE-Mutterrohr koaxial zum Hüllrohr und zum ersten ARE-Mutterrohr angeordnet ist, und wobei mehrere achsenparallel in einem Ringspalt zwischen dem ersten ARE-Mutterrohr und dem zweiten ARE-Mutterrohr angeordnete und verteilte hohle Stützelemente vorgesehen sind, und wobei beim Elongieren des Zylinder-Ensembles gemäß Verfahrensschritt (e) in den hohlen Stützelementen ein Unterdruck und in dem zweiten ARE-Mutterrohr ein Überdruck erzeugt wird, so dass die hohlen Stützelemente kollabieren unter Ausbildung
(a) von Kontaktstellen zwischen der Innenseite des vormaligen ersten ARE-Mutterrohres und der Außenseite des vormaligen zweiten ARE-Mutterrohres und
(b) von bogenförmigen Antiresonanzelemente der ersten Art.

Aus dem zweiten ARE-Mutterrohr werden - wie auch aus dem ersten ARE-Mutterrohr - bogenförmige Antiresonanzelemente der ersten Art erzeugt. Infolge der koaxialen Anordnung von ersten und zweitem ARE-Mutterrohr bilden die aus dem ersten ARE-Mutterrohr erzeugten äußeren Bögen (näher am Mantel) und die aus dem zweiten ARE-Mutterrohr erzeugten und weiter vom Mantel entfernten, inneren Bögen jeweils zusammen einen Doppelbogen. Die äußeren Bögen sind in den inneren Bögen verschachtelt und bilden daher verschachtelte Strukturelemente (nested elements). Die Scheitelpunkte liegen dabei auf einer gemeinsamen geraden Linie, die vom Mittelpunkt des optischen Bauteils (der Bauteil-Längsachse) ausgehend in radialer Richtung verläuft. Der innere Bogen hat dabei eine geringere Krümmung (und damit einen größeren Radius) als der äußere Bogen.

Zur Erzeugung der inneren Bögen werden in den Ringspalt zwischen dem ersten und dem zweiten ARE-Mutterrohr hohle Stützelemente einzeln oder paarweise gleichmäßig verteilt. Die hohlen Stützelemente entsprechen den oben erläuterten Stützrohren und sie können dieselbe Geometrie (Durchmesser, Wanddicke) und Material-Zusammensetzung oder eine andere Geometrie und Material-Zusammensetzung haben.

In den hohlen Stützelementen wird beim Elongieren und Kollabieren des Zylinder-Ensembles gemäß Verfahrensschritt (e) ein gegenüber dem Umgebungsdruck verringerter Druck (Unterdruck) und in dem zweiten Mutterrohr ein gegenüber dem Umgebungsdruck erhöhter Druck (Überdruck) erzeugt. Beim Kollabieren heften die hohlen Stützelemente anhand des oben für die "Stützrohre" erläuterten Anheftungs- und Aufblasvorgangs vorgegebene Anheftstellen des zweiten ARE-Mutterrohres an vorgegebenen Kontaktstellen an der Innenseite des ersten ARE-Mutterrohres an. Damit sich ein Doppelbogen ausbildet, liegen die Anheftstellen beim ersten und zweiten ARE-Mutterrohr paarweise auf gemeinsamen geraden Linien, die vom Mittelpunkt des optischen Bauteils (der Bauteil-Längsachse) ausgehend in radialer Richtung verlaufen. Dementsprechend sind auch die Stützelemente beziehungsweise die "Stützrohre" auf diesen Linien positioniert.

### Messmethoden und Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Antiresonanzelemente können einfache oder verschachtelte Strukturelemente der Hohlkernfaser sein. Sie haben mindestens eine Wandung, die aus Richtung des Hohlkerns gesehen eine negative Krümmung hat (konvex) oder keine Krümmung hat (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorform ling

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Verschachtelte Antiresonanzelement-Vorformlinge bilden in der Hohlkernfaser verschachtelte Antiresonanzelemente. Sie setzen sich zusammen aus einem ARE-Außenrohr und mindestens einem weiteren Strukturelement, das in der Innenbohrung des ARE-Außenrohres angeordnet ist. Bei dem weiteren Strukturelement kann es sich um ein weiteres Rohr handeln, das an der Innenmantelfläche des Außenrohres anliegt. Das weitere Rohr wird als "Nested Element" oder kurz als "NE- Innenrohr" oder auch als "verschachteltes NE-Innenrohr" bezeichnet.

In der Innenbohrung des NE-Innenrohres kann bei mehrfach verschachtelten Antiresonanzelement-Vorformlingen mindestens ein weiteres Strukturelement angeordnet sein, beispielsweise ein an der Innenmantelfläche des verschachtelten NE-Innenrohres anliegendes, drittes Rohr. Um bei mehrfach verschachtelten Antiresonanzelement-Vorformlingen zwischen den mehreren Rohren zu unterscheiden, die innerhalb des ARE-Außenrohres angeordnet sind, wird gegebenenfalls zwischen "äußerem NE-Innenrohr" und "innerem NE-Innenrohr" unterschieden.

Der Begriff "Querschnitt" in Verbindung mit zylinderförmigen Antiresonanzelement-Vorformlingen, deren zylinderförmigen Strukturelementen und dem Kapillarhalbzeug bezeichnet stets den Querschnitt senkrecht zur jeweiligen Zylinderlängsachse, und zwar - sofern nichts anderes angegeben - bei rohrförmigen Bauteilen den Querschnitt der Außenkontur (nicht: den Querschnitt der Innenkontur).

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling bezeichnet.

### Vorform / primäre Vorform / sekundäre Vorform / Kernvorform (Cane)

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die primäre Vorform kann als Ensemble aus mindestens einem Hüllrohr und darin lose aufgenommenen oder fest fixierten Vorformlingen oder Vorstufen für Antiresonanzelemente vorliegen. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

Als Kernvorform (engl. Cane) wird in der Literatur eine Vorform bezeichnet, die durch Kollabieren und/oder Elongieren einer primären Vorform erhalten wird und die damit unter die Definition der sekundären Vorform fällt. Typischerweise wird sie vor oder beim Ziehen der Hohlkernfaser mit zusätzlichem Mantelmaterial überfangen.

### Elongieren / Kollabieren

Beim Elongieren wird die primäre Vorform thermisch gestreckt. Die Streckung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im gestreckten, elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteilen werden geschlossen oder verengt. Das Kollabieren geht in der Regel mit einem Elongieren einher.

### Hohlkern / Innerer Mantelbereich / Äußerer Mantelbereich

Das Ensemble aus mindestens einem Hüllrohr und darin lose aufgenommenen oder fest fixierten ARE-Vorformlingen wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf das Ensemble erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: Querschnitte von Antiresonanten Hohlkernfasern beziehungsweise von Vorformen dafür mit verschiedenen "Bogen-Designs", wobei die Designs (a) bis (d) gemäß der Erfindung ausgestaltet sind und die Designs (e) und (f) Referenzbeispiele darstellen,
- **Figur 2**: Verfahrensschritte zur Herstellung einer Antiresonanten Hohlkernfaser mit einer ersten Variante des Designs 1 von Figur 1,
- **Figur 3**: Verfahrensschritte zur Herstellung einer Antiresonanten Hohlkernfaser mit dem Design 2 von Figur 1,
- **Figur 4**: Verfahrensschritte zur Herstellung einer Antiresonanten Hohlkernfaser mit dem Design 2A von Figur 1,
- **Figur 5**: Verfahrensschritte zur Herstellung einer Antiresonanten Hohlkernfaser mit einer zweiten Variante des Designs 1 von Figur 1, und
- **Figur 6**: Verfahrensschritte zur Herstellung einer Antiresonanten Hohlkernfaser mit dem Design 4 von Figur 1.

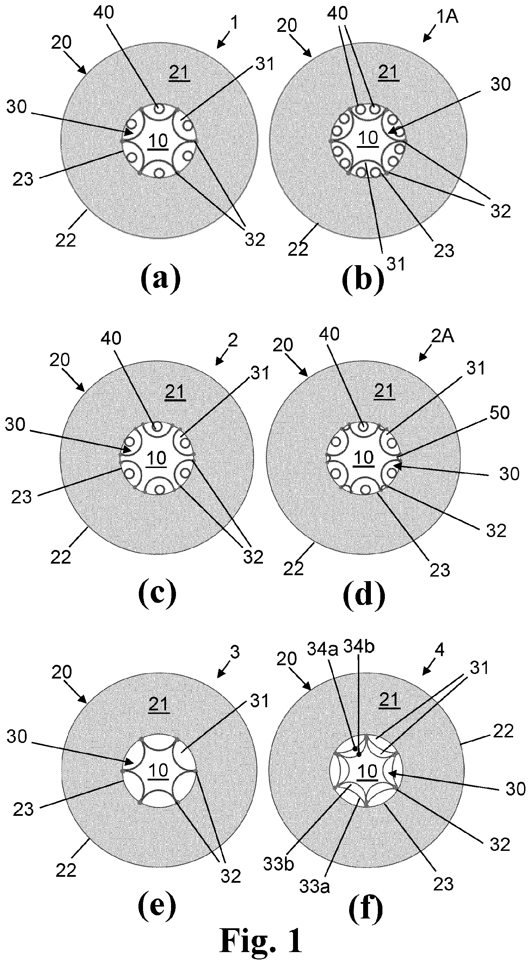

Die in **Figur 1** schematisch dargestellten Designs 1, 1A, 2, 2A, 3, 4 sind identisch für eine Antiresonante Hohlkernfaser und für eine Vorform, aus der die Hohlkernfaser gezogen werden kann. Alle Designs 1, 1A, 2, 2A, 3, 4 haben einen Hohlkern 10; ein Hüllrohr 20 mit einer Wandung 21, einer Außenseite 22 und einer Innenseite 23; bogenförmige Antiresonanzelemente 30 mit Wölbungsflächen 31, die vom Hohlkern 10 aus gesehen eine negative (konvexe) Krümmung haben und deren beide Bogenenden an Anheftungspunkten 32 der Mantel-Innenseite 23 angeheftet sind.

Bei den Designs 1, 1A, 2, 2A sind innerhalb der Wölbungsflächen 31 innere, verschachtelte Antiresonanzelemente 40 mit rundem Querschnitt angeordnet, die mit der Mantel-Innenseite 23 verbunden sind.

Bei den Designs 1 und 1A sind die bogenförmigen Antiresonanzelemente 30 miteinander verbunden, wobei sich benachbarte Bögen einen Anheftungspunkt 32 teilen. Beim Design 1 in **Figur 1(a)** ist innerhalb jeder Wölbungsfläche 31 ein einzelnes verschachteltes Antiresonanzelement 40 mit rundem Querschnitt angeordnet. Beim Design 1A von **Figur 1(b)** sind innerhalb jeder Wölbungsfläche 31 die verschachtelten Antiresonanzelemente 40 mit rundem Querschnitt paarweise angeordnet.

Bei den Designs 2 und 2A sind die bogenförmigen Antiresonanzelemente 30 nicht miteinander verbunden. Jedes bogenförmige Antiresonanzelement 30 verfügt über zwei Anheftungspunkte 32, an denen es an der Mantel-Innenseite fixiert ist. Innerhalb jeder Wölbungsfläche 31 ist ein einzelnes verschachteltes Antiresonanzelement 40 mit rundem Querschnitt angeordnet. Beim Design 2 **in** **Figur 1(c)** erstreckt sich zwischen benachbarten bogenförmigen Antiresonanzelementen 30 ein freier Streifen der Mantel-Innenseite 32. Beim Design 2A von Figur 1(d) ist zwischen benachbarten bogenförmigen Antiresonanzelementen 30 ein weiteres Antiresonanzelement 50 mit negativer Krümmung angeordnet, das den freien Streifen der Mantel-Innenseite 32 vollständig abdeckt.

Die Designs 3 und 4 enthalten nur bogenförmige Antiresonanzelemente 30, die miteinander verbunden sind, wobei sich benachbarte Bögen einen Anheftungspunkt 32 teilen.

Das in **Figur 1(e)** gezeigte Design 3 hat einfache bogenförmige Antiresonanzelemente 30. Das in **Figur 1(f)** gezeigte Design 4 hat bogenförmige Antiresonanzelemente 30, die als Doppelbögen 33a, 33b ausgeführt sind. Die Doppelbögen 33a, 33b haben unterschiedliche Radien und gemeinsame Anheftungspunkte 32. Ihre Scheitelpunkte 34a, 34b liegen auf der gleichen Radiallinie. Der näher am Mantel 20 liegende innere Bogen 33a ist verschachtelt im äußeren Bogen 33b.

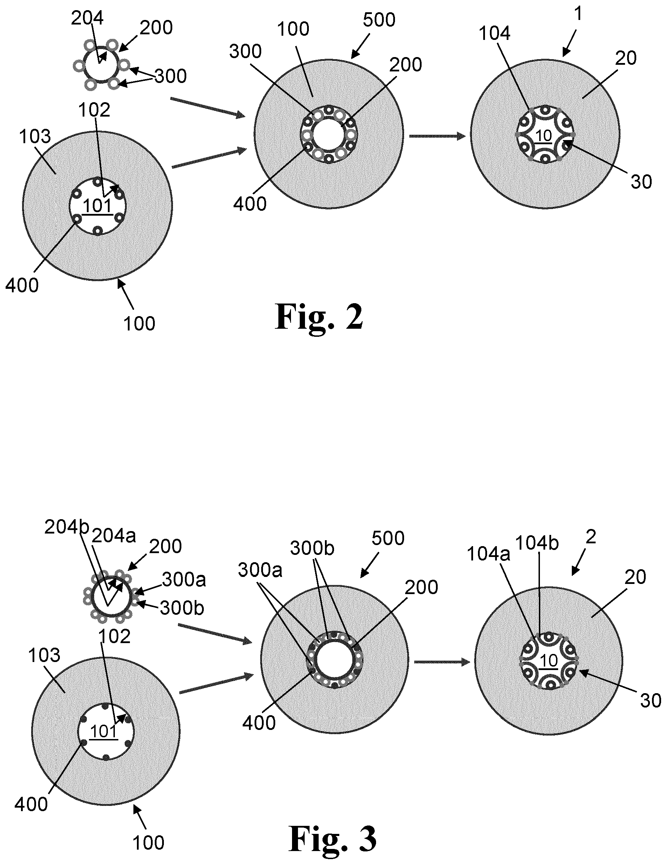

Nachfolgend wird anhand der Figuren 2 bis 4 die Herstellung der Designs 1, 2, 2A und 4 erläutert.

**Figur 2** zeigt schematisch eine erste Variante für die Herstellung einer Antiresonante Hohlkernfaser mit dem Design 1. Dazu werden folgende zylinderförmige Bauteile bereitgestellt:
(i) Ein dickwandiges Hüllrohr 100 ("Jacketrohr") aus Quarzglas, das eine Hüllrohr-Innenbohrung 101 und eine Hüllrohr-Längsachse aufweist, entlang der sich eine von einer Hüllrohr-Innenseite 102 und einer Außenseite begrenzte Hüllrohr-Wandung 103 erstreckt. Das Hüllrohr 100 weist einen Innendurchmesser d_{H} von 25mm und einen Außendurchmesser von 90mm auf.
(ii) Ein Antiresonanzelement-Mutterrohr 200 (ARE-Mutterrohr) aus Quarzglas, das eine Mutterohr-Innenbohrung 201 und eine Mutterrohr-Längsachse aufweist, entlang der sich eine von einer Innenseite und einer Außenseite begrenzte Mutterrohr-Wandung erstreckt. Das ARE-Mutterrohr hat einen Außendurchmesser D_{M1} von 20mm.
(iii) Sechs baugleiche Stützrohre 300 aus Quarzglas, die jeweils einen Außendurchmesser Ds von 2,5mm und eine Wanddicke von 0,15mm aufweisen.
(iv) Ebenfalls sechs baugleiche Kapillaren 400 aus Quarzglas, die jeweils einen Außendurchmesser D_{z} von 2,2mm und eine Wanddicke von 0,35mm aufweisen.

Diese zylinderförmigen Bauteile (100; 200; 300, 400) werden zu einem Bauteil-Ensemble 500 zusammengefügt. Zu diesem Zweck werden die sechs Stützrohre 300 an vorgegebenen Anheftungsstellen 204 der Außenseite des ARE-Mutterrohres 200 thermisch fixiert, so dass die Längsachsen aller Rohre (200, 300) parallel zueinander verlaufen, und die Stützrohre 300 gleichmäßig (in einem Winkel von 60 Grad) um die Außenseite des ARE-Mutterrohres 200 verteilt sind.

Außerdem werden die sechs Kapillaren 400 an der Innenseite des Hüllrohres 100 thermisch fixiert, so dass die Längsachsen aller Rohre (100, 400) parallel zueinander verlaufen und die Kapillaren 400 gleichmäßig (in einem Winkel von 60 Grad) um die Innenseite des Hüllrohres 100 verteilt sind.

Der eine Fügeverbund aus ARE-Mutterrohr 200 und Stützrohren 300 wird in die Innenbohrung 101 des anderen Fügeverbundes aus Hüllrohr 100 und Kapillaren 400 so eingesetzt, dass sich zwischen den Stützrohren 300 und den Kapillaren 400 der gleiche periphere Abstand einstellt (30 Winkelgrade). Somit ist zwischen benachbarten Kapillaren 400 jeweils mittig ein Stützrohr 300 angeordnet. Nach dem Ausrichten werden die noch losen Bauteil-Komponenten zur Fixierung ihrer Lage mit einer Anheftmasse miteinander verbunden.

Das Ensemble 500 bildet eine primäre Vorform und wird anschließend zu einer sekundären Vorform (häufig auch als "Cane" bezeichnet) elongiert. Dabei kollabiert das Hüllrohr 100 teilweise, so dass seine Innenseite 102 in Kontakt mit den Stützrohren 300 gelangt und diese mit der Hüllrohr-Innenseite 102 verschmolzen werden. Die Stützrohre 300 sind danach über ihre gesamte Länge sowohl mit der Hüllrohr-Innenseite 102 (entlang einer axialen Kontaktstelle 104), als auch mit der Außenseite des ARE-Mutterrohres 200 (entlang einer axialen Anheftungsstelle 204) verschmolzen. Daher bildet sich zwischen benachbarten Stützrohren 300 jeweils ein lateral geschlossener Hohlkanal, durch den sich eine einzelne Kapillare 400 erstreckt.

Beim anschließenden Faserziehprozess wird die sekundäre Vorform in vertikaler Orientierung zonenweise erweicht und dabei weiter elongiert und kollabiert. Dabei wird in den (elongierten) Stützrohren 300 ein Unterdruck erzeugt, wohingegen in den (elongierten) Kapillaren 400 und in den Hohlkanälen ein Überdruck erzeugt wird. Das Erzeugen von Unterdruck beziehungsweise Überdruck geschieht durch den Anschluss von Gas- beziehungsweise Vakuumleitungen am oberen Ende der sekundären Vorform. Bereiche, die nicht von Gasdruck oder Vakuum beeinflusst werden sollen, können auch verschlossen werden. Überdruck beziehungsweise Unterdruck sind Differenzdrücke zum jeweils umgebenden Bereich.

Beim Faserziehprozess kollabieren die sechs Stützrohre 300 vollständig und ziehen dadurch die Anheftungsstellen 204 am ARE-Mutterrohr 200 gegen die Kontaktstellen 104 am Hüllrohr 100. Der Rest des kollabierten Stützrohres 300 bildet einen kleinen Glasposten an der Kontaktstelle 104. Gleichzeitig werden die sechs Hohlkanäle und die sechs Kapillaren 400 durch den Überdruck aufgeblasen. Infolgedessen bilden sich aus dem ehemaligen ARE-Mutterrohr 200 sechs bogenförmige Antiresonanzelemente 30 mit Kontaktstellen zu dem jeweils benachbarten bogenförmigen Antiresonanzelement 30.

In der so erzeugten Antiresonanten Hohlkernfaser 1 sind die ehemaligen Stützrohre somit verschwunden, und das ehemalige ARE-Mutterrohr bildet sechs Antiresonanzelemente, die jeweils im Querschnitt in Richtung der Faser-Längsachse gesehen bogenförmig mit einem linken Bogenende und mit einem rechten Bogenende und mit einer Auswölbung in Richtung des Hohlkerns 10 ausgebildet sind, wobei die Bogenenden benachbarter Antiresonanzelemente an derselben axialen Kontaktstelle 104 der ehemaligen Mantel-Innenseite fixiert sind.

**Figur 3** zeigt schematisch den Ablauf des Verfahrens zur Herstellung einer Antiresonanten Hohlkernfaser mit dem Design 2. Im Folgenden werden lediglich die Verfahrensunterschiede gegenüber der Herstellung von Design 1 laut Figur 2 erläutert:
- Anstatt von sechs werden 12 baugleiche Stützrohre 300a, 330b aus Quarzglas eingesetzt.
- Die 12 Stützrohre 300a, 300b werden paarweise an vorgegebenen Anheftungsstellen 204a; 204b der Außenseite des ARE-Mutterrohres 200 thermisch fixiert. Die paarweisen Anheftungsstellen 204a; 204b liegen eng beieinander; der freie Abstand zwischen den dort fixierten Stützrohren 300a, 300b beträgt etwa 1mm. Abgesehen von der paarweisen Anordnung sind die Stützrohre 300a; 300b gleichmäßig um die Außenseite des ARE-Mutterrohres 200 verteilt.
- Beim Elongieren des Ensembles 500 zu der sekundären Vorform kollabiert das Hüllrohr 100 teilweise, so dass seine Innenseite 102 in Kontakt mit den Stützrohren 300a; 300b gelangt und diese mit der Hüllrohr-Innenseite 102 verschmolzen werden. Die Stützrohre 300a; 300b sind danach über ihre gesamte Länge sowohl mit der Hüllrohr-Innenseite 102 (entlang den axialen Kontaktstellen 104a, 104b), als auch mit der Außenseite des ARE-Mutterrohres 200 (entlang den axialen Anheftungsstellen 204a; 204b) verschmolzen. Daher bildet sich zwischen den eng benachbarten Stützrohr-Paaren 300a; 300b ein lateral geschlossener, schmaler Hohlkanal. Auch zwischen den weiter entfernt angeordneten benachbarten Stützrohren 300a; 300b bildet sich ein weiter Hohlkanal. Durch jeden der weiten Hohlkanäle erstreckt sich eine Kapillare 400.
- Beim Faserziehprozess wird in den schmalen Hohlkanälen ein Unterdruck erzeugt, wohingegen in den (elongierten) Kapillaren 400 und in den weiten Hohlkanälen ein Überdruck erzeugt wird. Die 12 Stützrohre 300a; 300b kollabieren vollständig und ziehen dadurch die Anheftungsstellen 204a; 204b am ARE-Mutterrohr 200 gegen die Kontaktstellen 104a; 104b am Hüllrohr 100. Auch die schmalen Hohlkanäle kollabieren. Gleichzeitig werden die sechs weiten Hohlkanäle und die sechs Kapillaren 400 durch den Überdruck aufgeblasen. Infolgedessen bilden sich aus dem ehemaligen ARE-Mutterrohr 200 sechs bogenförmige Antiresonanzelemente 30, die nicht miteinander verbunden sind.

In der so erzeugten Antiresonanten Hohlkernfaser 2 sind die ehemaligen Stützrohre somit verschwunden, und das ehemalige ARE-Mutterrohr bildet sechs Antiresonanzelemente, die jeweils im Querschnitt in Richtung der Faser-Längsachse gesehen bogenförmig mit einem linken Bogenende und mit einem rechten Bogenende und mit einer Auswölbung in Richtung des Hohlkerns 10 ausgebildet sind, wobei die Bogenenden benachbarter Antiresonanzelemente an benachbarten axialen Kontaktstellen 104a; 104b der ehemaligen Mantel-Innenseite fixiert und nicht miteinander verbunden sind.

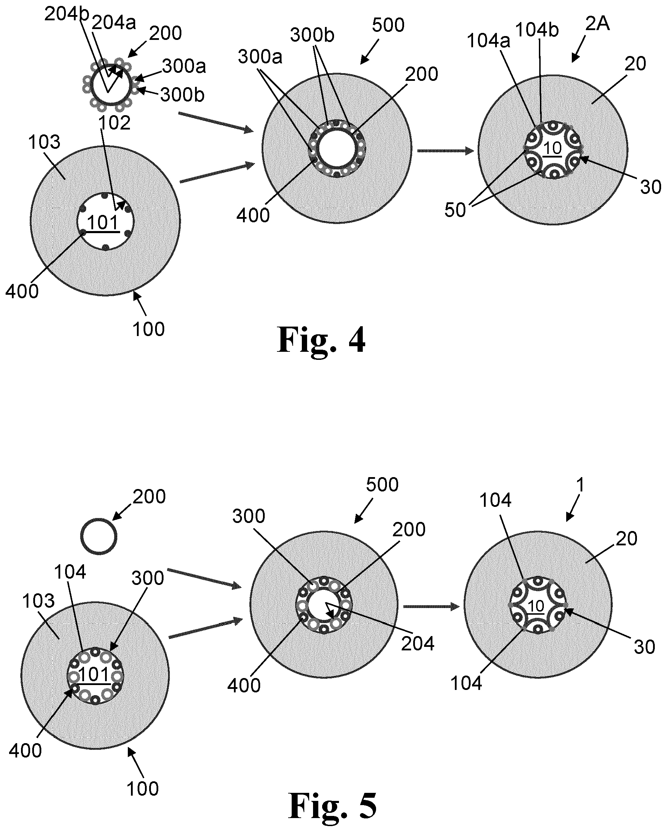

**Figur 4** zeigt schematisch den Ablauf des Verfahrens zur Herstellung einer Hohlkernfaser mit dem Design 2A. Im Folgenden werden lediglich die Verfahrensunterschiede gegenüber der Herstellung von Design 2 erläutert:
- Beim Faserziehprozess wird in den schmalen Hohlkanälen ein Überdruck erzeugt, so dass diese nicht vollständig kollabieren, sondern in Richtung des Hohlkern aufgeblasen werden und antiresonante Brückenelemente 50 mit negativer Krümmung bilden.

In der so erzeugten Antiresonanten Hohlkernfaser 2A sind die ehemaligen Stützrohre somit verschwunden und bilden teilweise kleine Glasposten im Bereich der Kontaktstellen 104a; 104b der Bogenenden und einem dazwischen angeordneten Brückenelement 50. Das ehemalige ARE-Mutterrohr bildet sechs Antiresonanzelemente, die jeweils im Querschnitt in Richtung der Faser-Längsachse gesehen bogenförmig mit einem linken Bogenende und mit einem rechten Bogenende und mit einer Auswölbung in Richtung des Hohlkerns 10 ausgebildet sind, wobei die Bogenenden benachbarter Antiresonanzelemente an benachbarten axialen Kontaktstellen 104a; 104b der ehemaligen Mantel-Innenseite fixiert und nicht miteinander verbunden sind. Der Bereich zwischen benachbarten Kontaktstellen 104a; 104b wird von den Brückenelementen 50 ausgefüllt.

**Figur 5** zeigt schematisch eine zweite Variante für die Herstellung einer Antiresonante Hohlkernfaser mit dem Design 1. Im Folgenden werden lediglich die Verfahrensunterschiede gegenüber der Herstellung von Design 1 laut Figur 2 erläutert:
- Die sechs Stützrohre 300 werden nicht an Anheftungsstellen 204 des ARE-Mutterrohres angebondet, sondern an vorgegebenen Kontaktstellen 104 der der Innenseite 102 des Hüllrohres 100. Sie sind gleichmäßig (in einem Winkel von 60 Grad) um die Hüllrohr-Innenseite 102 verteilt und wechseln sich mit den dort ebenfalls angebondeten sechs Kapillaren 400 so ab, dass zwischen benachbarten Kapillaren 400 jeweils mittig ein Stützrohr 300 angeordnet ist.
- Das ARE-Mutterrohr 200 wird in die Innenbohrung 101 des Fügeverbundes aus Hüllrohr 100, Stützrohren 300 und Kapillaren 400 unter Bildung des Ensembles 500 eingesetzt. Nach dem Ausrichten werden diese Bauteil-Komponenten mit einer Anheftmasse miteinander verbunden und in ihrer Lage fixiert.
- Das Ensemble 500 wird zu einer sekundären Vorform elongiert. Dabei kollabiert das Hüllrohr 100 teilweise, so dass die daran fixierten Stützrohre 300 in Kontakt mit Anheftungsstellen 204 auf der Außenseite des ARE-Mutterrohres 200 gelangen und dort mit diesem verschmolzen werden. Die Stützrohre 300 sind danach über ihre gesamte Länge sowohl mit der Hüllrohr-Innenseite 102 (entlang der axialen Kontaktstelle 104), als auch mit der Außenseite des ARE-Mutterrohres 200 (entlang der axialen Anheftungsstelle 204) verschmolzen.

Beim Faserziehprozess bilden sich durch Umformung des ARE-Mutterrohres 200 sechs Antiresonanzelemente, die jeweils im Querschnitt in Richtung der Faser-Längsachse gesehen bogenförmig mit einem linken Bogenende und mit einem rechten Bogenende und mit einer Auswölbung in Richtung des Hohlkerns 10 ausgebildet sind, wobei die Bogenenden benachbarter Antiresonanzelemente an derselben axialen Kontaktstelle 104 der ehemaligen Mantel-Innenseite fixiert sind.

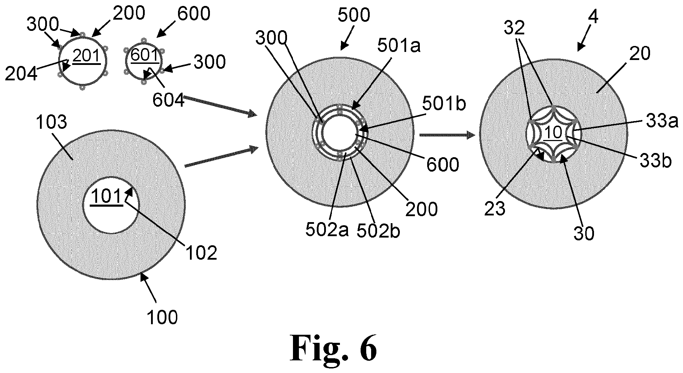

**Figur 6** zeigt schematisch einen Verfahrensablauf zur Herstellung einer Antiresonante Hohlkernfaser mit dem Design 4. Dazu werden folgende zylinderförmige Bauteile bereitgestellt:
(i) Ein dickwandiges Hüllrohr 100 ("Jacketrohr") aus Quarzglas, das eine Hüllrohr-Innenbohrung 101 und eine Hüllrohr-Längsachse aufweist, entlang der sich eine von einer Hüllrohr-Innenseite 102 und einer Außenseite begrenzte Hüllrohr-Wandung 103 erstreckt. Das Hüllrohr 100 weist einen Innendurchmesser d_{H} von 25mm und einen Außendurchmesser von 90mm auf.
(ii) Ein erstes, äußeres Antiresonanzelement-Mutterrohr 200 (erstes, Hohlkernfernes ARE-Mutterrohr) aus Quarzglas, das eine Mutterohr-Innenbohrung 201 und eine Mutterrohr-Längsachse aufweist, entlang der sich eine von einer Innenseite und einer Außenseite begrenzte Mutterrohr-Wandung erstreckt. Das erste, äußere ARE-Mutterrohr hat einen Außendurchmesser von20mm und einen Innendurchmesser von 19mm.
(iii) Ein zweites, inneres Antiresonanzelement-Mutterrohr 600 (zweites Hohlkernnahes ARE-Mutterrohr) aus Quarzglas, das eine Mutterohr-Innenbohrung 601 und eine Mutterrohr-Längsachse aufweist, entlang der sich eine von einer Innenseite und einer Außenseite begrenzte Mutterrohr-Wandung erstreckt. Das zweite, innere ARE-Mutterrohr hat einen Außendurchmesser von 14mm und einen Innendurchmesser von 12,5mm.
(iv)Zwölf baugleiche Stützrohre 300 aus Quarzglas, die jeweils einen Außendurchmesser von 2,5mm und eine Wanddicke von 0,35mm aufweisen.

Diese zylinderförmigen Bauteile (100; 200; 300, 600) werden zu einem Bauteil-Ensemble 500 zusammengefügt. Zu diesem Zweck werden jeweils sechs Stützrohre 300 an vorgegebenen Anheftungsstellen 204 der Außenseite des ersten ARE-Mutterrohres 200 und an vorgegebenen Anheftungsstellen 604 der Außenseite des zweiten ARE-Mutterrohres 600 thermisch fixiert, so dass die Längsachsen aller Rohre (200, 600, 300) parallel zueinander verlaufen, und die Stützrohre 300 gleichmäßig (in einem Winkel von 60 Grad) um die Außenseiten der ARE-Mutterrohre 200; 600 verteilt sind.

Der erste Fügeverbund aus erstem ARE-Mutterrohr 200 und sechs Stützrohren 300 und der zweite Fügeverbund aus dem zweitem ARE-Mutterrohr 600 und sechs weiteren Stützrohren 300 wird in die Innenbohrung 101 des Hüllrohres 100 so eingesetzt, dass die Stützrohre 300 von erstem und zweitem ARE-Mutterrohr (200; 600) paarweise auf einer gemeinsamen radialen Linie liegen, auf der auch die vorgegebenen Kontaktstellen 104 auf der Hüllrohr-Innenseite 102 liegen.

Das Ensemble 500 bildet eine primäre Vorform und wird anschließend zu einer sekundären Vorform ("Cane") elongiert. Dabei kollabiert das Hüllrohr 100 teilweise, so dass seine Innenseite 102 in Kontakt mit den Stützrohren 300 des ersten Fügeverbundes gelangt und diese mit der Hüllrohr-Innenseite 102 verschmolzen werden. Außerdem kollabiert das erste, äußere ARE-Mutterrohr 200 teilweise, so dass seine Innenseite in Kontakt mit den Stützrohren 300 des zweiten Fügeverbundes gelangt und diese mit der Innenseite des ersten ARE-Mutterrohres 200 verschmolzen werden.

Alle Stützrohre 300 sind danach über ihre gesamte Länge sowohl mit der Hüllrohr-Innenseite 102 (entlang einer axialen Kontaktstelle 104), als auch mit der Außenseite ihres jeweiligen ARE-Mutterrohres 200; 600 (entlang der ursprünglichen axialen Anheftungsstellen 204; 604) verschmolzen. Daher bildet sich zwischen benachbarten Stützrohren 300 jeweils ein lateral geschlossener Hohlkanal 502a; 502b, und zwar in zwei benachbarten koaxialen Reihen 501a; 501b, also insgesamt 2x 6 Hohlkanäle.

Beim anschließenden Faserziehprozess wird die sekundäre Vorform in vertikaler Orientierung zonenweise erweicht und dabei weiter elongiert und kollabiert. Dabei wird in den (elongierten) Stützrohren 300 ein Unterdruck erzeugt, wohingegen in den Hohlkanälen 502a; 502b ein Überdruck erzeugt wird. Das Erzeugen von Unterdruck beziehungsweise Überdruck geschieht durch den Anschluss von Gasbeziehungsweise Vakuumleitungen am oberen Ende der sekundären Vorform 500. Bereiche, die nicht von Gasdruck oder Vakuum beeinflusst werden sollen, können auch stirnseitig verschlossen werden.

Beim Faserziehprozess kollabieren die zwölf Stützrohre 300 vollständig und ziehen dadurch die Anheftungsstellen 204; 604 an den ARE-Mutterrohren 200; 600 gegen die Kontaktstellen 104 am Hüllrohr 100 beziehungsweise in Richtung dieser Kontaktstellen 104. Gleichzeitig werden die zwölf Hohlkanäle 502a; 502b durch den Überdruck aufgeblasen. Infolgedessen bilden sich aus den ehemaligen ARE-Mutterrohren 200; 600 zwei Reihen von jeweils sechs miteinander verbundenen, bogenförmigen Antiresonanzelemente 30, die als Doppelbögen 33a, 33b ausgeführt sind. Die Doppelbögen 33a, 33b haben unterschiedliche Radien und gemeinsame Anheftungspunkte 32 am Fasermantel. Ihre Scheitelpunkte und der jeweilige Anheftungspunkt 32 liegt auf der gleichen Radiallinie. Der Krümmungsradius des äußeren Bogens 33b beträgt etwa 19µm, und der des inneren Bogens 33a beträgt etwa 33µm.

In der so erzeugten Antiresonanten Hohlkernfaser 4 sind die ehemaligen Stützrohre somit verschwunden, und die beiden ehemaligen ARE-Mutterrohre 200; 600 bilden 12 Antiresonanzelemente, verteilt als Doppelbögen 33a; 33b in zwei koaxialen Reihen. Die Doppelbögen 33a haben jeweils ein gemeinsames linkes Bogenende und ein gemeinsames rechtes Bogenende, wobei die Bogenenden benachbarter Antiresonanzelemente an derselben axialen Kontaktstelle 32 der ehemaligen Mantel-Innenseite fixiert sind.

Bei den oben erläuterten Ausführungsbeispielen bestehen alle Bestandteile der Antiresonanten Hohlkernfasern aus undotiertem Quarzglas. Die Erfindung ist auch mit Bestanteilen aus anderen Werkstoffen, insbesondere aus anderen Gläsern oder aus Kunststoffen, die für die Arbeitswellenlänge transparent sind, ohne weiteres ausführbar. So kann beispielsweise durch Zusatz von Dotierstoffen die Viskosität von Quarzglas verringert oder erhöht werden. Als die Viskosität von Quarzglas absenkende Dotierstoffe kommen vorzugsweise Fluor, Chlor und/oder Hydroxylgruppen zum Einsatz. Als die Viskosität von Quarzglas erhöhende Dotierstoff kommen Al₂O₃, TiO₂ und/oder Stickstoff in Betracht. Je nach ihrer thermischen Belastung beim Faserziehprozess oder ihrer Filigranität können einzelne Faser-Bestanteile einen die Viskosität von Quarzglas absenkenden oder die Viskosität von Quarzglas erhöhenden Dotierstoff enthalten.

## Patentansprüche

1. Antiresonantes optisches Bauteil (1, 1A, 2, 2A, 3, 4), das einen sich entlang einer Bauteil-Längsachse erstreckenden Hohlkern (10), einen den Hohlkern (10) umgebenden Mantel (20) mit einer dem Hohlkern (10) zugewandten umlaufenden Innenseite (23) sowie Antiresonanzelemente einer ersten Art (30) aufweist, die jeweils im Querschnitt in Richtung der Bauteil-Längsachse gesehen bogenförmig mit einem linken Bogenende und mit einem rechten Bogenende und mit einer Auswölbung in Richtung des Hohlkerns (10) ausgebildet sind, wobei die Bogenenden an Kontaktstellen (32) mit der Mantel-Innenseite (23) verbunden sind und mit dieser eine Wölbungsfläche (31) aufspannen,
**dadurch gekennzeichnet, dass** eine zweite Art (40) von Antiresonanzelementen vorgesehen ist, wobei Antiresonanzelemente der zweiten Art (40) mit Antiresonanzelementen der ersten Art (30) in dem Sinne verschachtelt sind, dass im Querschnitt in Richtung der Bauteil-Längsachse gesehen jeweils mindestens ein Antiresonanzelement der zweiten Art (40) innerhalb der Wölbungsfläche angeordnet ist, und dass die verschachtelten Antiresonanzelemente der zweiten Art (40) im Querschnitt in Richtung der Bauteil-Längsachse gesehen jeweils kreisrund oder oval ausgebildet sind.

2. Optisches Bauteil nach Anspruch 1, **dadurch gekennzeichnet, dass** die verschachtelten Antiresonanzelemente der zweiten Art (40) jeweils mit der Mantel-Innenseite (23) verbunden sind.

3. Optisches Bauteil nach Anspruch 1 oder 2, **dadurch gekennzeichnet, dass** die verschachtelten Antiresonanzelemente der zweiten Art (40) jeweils mit dem bogenförmigen Antiresonanzelement der ersten Art (30) keinen Kontakt haben.

4. Optisches Bauteil nach einem oder mehreren der vorhergehenden Ansprüche, **dadurch gekennzeichnet, dass** mindestens vier Antiresonanzelemente der ersten Art (30) um die Mantel-Innenseite (23) gleichmäßig verteilt sind, wobei die Bogenenden benachbarter Antiresonanzelemente der ersten Art (30) Kontakt miteinander haben.

5. Optisches Bauteil nach einem oder mehreren der vorhergehenden Ansprüche 1 bis 3, **dadurch gekennzeichnet, dass** mindestens vier Antiresonanzelemente der ersten Art (30) um die Mantel-Innenseite (23) gleichmäßig verteilt sind, wobei die Bogenenden benachbarter Antiresonanzelemente der ersten Art (30) keinen Kontakt miteinander haben.

6. Optisches Bauteil nach Anspruch 5, **dadurch gekennzeichnet, dass** Antiresonanzelemente einer dritten Art (50) vorgesehen sind, wobei zwischen benachbarten Antiresonanzelementen der ersten Art (30) jeweils mindestens ein Antiresonanzelemente der dritten Art (50) angeordnet ist, das mit den benachbarten Antiresonanzelementen der ersten Art (30) und mit der Mantel-Innenseite (23) verbunden ist.

7. Optisches Bauteil nach einem oder mehreren der vorhergehenden Ansprüche, **dadurch gekennzeichnet, dass** die Antiresonanzelemente der ersten Art (30) im Querschnitt in Richtung der Bauteil-Längsachse gesehen in Form eines äußeren Bogens (33b) und eines verschachtelten inneren Bogens (33a) mit jeweils einem linken Bogenende und mit einem rechten Bogenende und mit einer Auswölbung in Richtung des Hohlkerns (10) ausgebildet sind, wobei jeweils die linken Bogenenden des verschachtelten inneren Bogens (33a) und des äußeren Bogens (33b) und jeweils die rechten Bogenenden des verschachtelten inneren Bogens (33a) und des äußeren Bogens (33b) miteinander verbunden sind.

8. Verfahren zur Herstellung eines antiresonanten optischen Bauteils (1, 1A, 2, 2A, 3, 4), das einen sich entlang einer Bauteil-Längsachse erstreckenden Hohlkern (10), einen den Hohlkern (10) umgebenden Mantel (20) mit einer dem Hohlkern (10) zugewandten umlaufenden Innenseite (23) sowie Antiresonanzelemente aufweist, umfassend folgende Verfahrensschritte:
(a) Bereitstellen eines Hüllrohres (100), das eine Hüllrohr-Innenbohrung (101) und eine Hüllrohr-Längsachse aufweist, entlang der sich eine von einer Innenseite (102) und einer Außenseite begrenzte Hüllrohr-Wandung (103) erstreckt, wobei das Hüllrohr (100) einen Innendurchmesser d_{H} aufweist,
(b) Bereitstellen von Antiresonanzelement-Vorformlingen, umfassend mindestens ein erstes Antiresonanzelement-Mutterrohr (ARE-Mutterrohr (200)), das eine Mutterohr-Innenbohrung (201) und eine Mutterrohr-Längsachse aufweist, entlang der sich eine von einer Innenseite und einer Außenseite begrenzte Mutterrohr-Wandung erstreckt, wobei das erste ARE-Mutterrohr (200) einen Außendurchmesser D_{M1} aufweist, **gekennzeichnet durch**:
(c) Bereitstellen von Stützrohren (300) mit einem Außendurchmesser Ds, wobei gilt: D_{M1}+2D_{S}<d_{H},
(d) Bilden eines Zylinder-Ensembles (500), umfassend das Hüllrohr (100), das koaxial dazu angeordnete erste ARE-Mutterrohr (200) und mehrere achsenparallel in einem Ringspalt zwischen dem Hüllrohr (100) und dem ersten ARE-Mutterrohr (200) angeordnete und um den Ringspalt-Umfang verteilte Stützrohre (300),
(e) Elongieren des Zylinder-Ensembles (500) zu dem optischen Bauteil (1, 1A, 2, 2A, 3, 4), wobei in den Stützrohren (300) ein Unterdruck und in dem ersten ARE-Mutterrohr (200) ein Überdruck erzeugt wird, so dass das Hüllrohr (100) teilweise und die Stützrohre (300) mindestens teilweise kollabieren unter Ausbildung
• von Kontaktstellen (32) zwischen der Innenseite (102) des vormaligen Hüllrohres (100) und der Außenseite des vormaligen ersten ARE-Mutterrohres (200) und
• von bogenförmigen Antiresonanzelementen einer ersten Art (30), die jeweils im Querschnitt in Richtung der Bauteil-Längsachse gesehen bogenförmig mit einem linken Bogenende und mit einem rechten Bogenende und mit einer Auswölbung in Richtung des Hohlkerns (10) ausgebildet sind, wobei die Bogenenden an Kontaktstellen (32) mit der Mantel-Innenseite (23) verbunden sind und mit dieser eine Wölbungsfläche (31) aufspannen.

9. Verfahren nach Anspruch 8, **dadurch gekennzeichnet, dass** bei dem gemäß Verfahrensschritt (d) gebildeten Zylinder-Ensemble (500) mindestens vier Stützrohre (300) gleichmäßig im Ringspalt verteilt sind.

10. Verfahren nach Anspruch 8, **dadurch gekennzeichnet, dass** bei dem gemäß Verfahrensschritt (d) gebildeten Zylinder-Ensemble (500) mindestens acht Stützrohre (300) paarweise angeordnet und die Stützrohr-Paare gleichmäßig im Ringspalt verteilt sind.

11. Verfahren nach einem oder mehreren der vorhergehenden Ansprüche8 bis 10, **dadurch gekennzeichnet, dass** beim Bilden des Zylinder-Ensembles (500) gemäß Verfahrensschritt (d) mindestens ein Teil der Stützrohre (300) an der Mutterrohr-Außenseite und/oder an der Hüllrohr-Innenseite (102) fixiert ist.

12. Verfahren nach einem oder mehreren der vorhergehenden Ansprüche8 bis 11, **dadurch gekennzeichnet, dass** die gemäß Verfahrensschritt (b) bereitgestellten Antiresonanzelement-Vorformlinge mehrere NE-Kapillaren (400) mit einem Außendurchmesser Dz umfassen, wobei gilt: D_{Z}<D_{S}<D_{M1}, und dass beim gemäß Verfahrensschritt (d) gebildeten Zylinder-Ensemble (500) die NE-Kapillaren (400) an der Hüllrohr-Innenseite (102) fixiert sind, und im Ringspalt zwischen Stützrohren (300) und achsenparallel zu diesen angeordnet sind, und wobei beim Elongieren des Zylinder-Ensembles (500) gemäß Verfahrensschritt (e) in den NE-Kapillaren (400) ein Überdruck erzeugt wird, so dass daraus Antiresonanzelemente einer zweiten Art (40) gebildet werden, die mit den Antiresonanzelementen der ersten Art (30) in dem Sinne verschachtelt sind, dass im Querschnitt in Richtung der Bauteil-Längsachse gesehen jeweils mindestens ein Antiresonanzelement der zweiten Art (40) innerhalb der Wölbungsfläche angeordnet ist.

13. Verfahren nach einem oder mehreren der vorhergehenden Ansprüche 8 bis 12, **dadurch gekennzeichnet, dass** die gemäß Verfahrensschritt (b) bereitgestellten Antiresonanzelement-Vorformlinge mindestens ein zweites ARE-Mutterrohr (600) mit einem Außendurchmesser D_{M2} umfassen, wobei gilt: D_{S}<D_{M2}<D_{M1}, und wobei beim gemäß Verfahrensschritt (d) gebildeten Zylinder-Ensemble (500) das zweite ARE-Mutterrohr (600) koaxial zum Hüllrohr (100) und zum ersten ARE-Mutterrohr (200) angeordnet ist, und wobei mehrere achsenparallel in einem Ringspalt zwischen dem ersten ARE-Mutterrohr (200) und dem zweiten ARE-Mutterrohr (600) angeordnete und verteilte hohle Stützelemente (300) vorgesehen sind, und wobei beim Elongieren des Zylinder-Ensembles (500) gemäß Verfahrensschritt (e) in den hohlen Stützelementen (300) ein Unterdruck und in dem zweiten ARE-Mutterrohr (600) ein Überdruck erzeugt wird, so dass die hohlen Stützelemente (300) kollabieren unter Ausbildung
(a) von Kontaktstellen zwischen der Innenseite des vormaligen ersten ARE-Mutterrohres (200) und der Außenseite des vormaligen zweiten ARE-Mutterrohres (600) und
(b) von bogenförmigen Antiresonanzelementen der ersten Art (30) .

## Claims

1. An anti-resonant optical component (1, 1A, 2, 2A, 3, 4) which comprises a hollow core (10) extending along a longitudinal axis of the component, cladding (20), which surrounds the hollow core (10) and comprises a circumferential inner face (23) facing the hollow core (10), and anti-resonance elements of a first type (30), each of which, when viewed in cross-section in the direction of the longitudinal axis of the component, is arcuate having a left arc end and a right arc end and having a bulge in the direction of the hollow core (10), the arc ends being connected to the cladding inner face (23) at contact points (32) and spanning a curved area (31) together with the cladding inner face, **characterized in that** a second type (40) of anti-resonance elements is provided, anti-resonance elements of the second type (40) being nested with anti-resonance elements of the first type (30) in such a way that, when viewed in cross-section in the direction of the longitudinal axis of the component, at least one anti-resonance element of the second type (40) is arranged inside the curved area, and **in that**, when viewed in cross-section in the direction of the longitudinal axis of the component, each of the nested anti-resonance elements of the second type (40) is circular or oval.

2. The optical component according to claim 1, **characterized in that** the nested anti-resonance elements of the second type (40) are each connected to the cladding inner face (23).

3. The optical component according to claim 1 or 2, **characterized in that** the nested anti-resonance elements of the second type (40) each have no contact with the arcuate anti-resonance element of the first type (30).

4. The optical component according to one or more of the preceding claims, **characterized in that** at least four anti-resonance elements of the first type (30) are evenly distributed around the cladding inner face (23), the arc ends of adjacent anti-resonance elements of the first type (30) being in contact with one another.

5. The optical component according to one or more of the preceding claims 1 to 3, **characterized in that** at least four anti-resonance elements of the first type (30) are evenly distributed around the cladding inner face (23), the arc ends of adjacent anti-resonance elements of the first type (30) having no contact with one another.

6. The optical component according to claim 5, **characterized in that** anti-resonance elements of a third type (50) are provided, at least one anti-resonance element of the third type (50) being arranged between adjacent anti-resonance elements of the first type (30), which anti-resonance element of the third type is connected to the adjacent anti-resonance elements of the first type (30) and to the cladding inner face (23).

7. The optical component according to one or more of the preceding claims, **characterized in that**, when viewed in cross-section in the direction of the longitudinal axis of the component, the anti-resonance elements of the first type (30) are in the form of an outer arc (33b) and a nested inner arc (33a), each having a left arc end and a right arc end and having a bulge in the direction of the hollow core (10), each of the left arc ends of the nested inner arc (33a) and of the outer arc (33b) and each of the right arc ends of the nested inner arc (33a) and of the outer arc (33b) being connected to one another.

8. A method for producing an anti-resonant optical component (1, 1A, 2, 2A, 3, 4) which comprises a hollow core (10) extending along a longitudinal axis of the component, cladding (20), which surrounds the hollow core (10) and has a circumferential inner face (23) facing the hollow core (10), and anti-resonance elements, the method comprising the following method steps:
(a) providing a sheath tube (100), which comprises a sheath tube inner bore (101) and a sheath tube longitudinal axis, along which a sheath tube wall (103) extends, which is delimited by an inner face (102) and an outer face, the sheath tube (100) comprising an inner diameter d_{H},
(b) providing anti-resonance element preforms, which comprise at least a first anti-resonance element mother tube (ARE mother tube (200)) that comprises a mother tube inner bore (201) and a mother tube longitudinal axis, along which a mother tube wall extends, which is delimited by an inner face and an outer face, the first ARE mother tube (200) comprising an outer diameter D_{M1}, **characterized by**:
(c) providing support tubes (300) having an outer diameter Ds, where: D_{M1}+2D_{S}≤d_{H},
(d) forming a cylinder ensemble (500), which comprises the sheath tube (100), the first ARE mother tube (200) arranged coaxially therewith, and a plurality of support tubes (300) arranged axially in parallel in an annular gap between the sheath tube (100) and the first ARE mother tube (200) and distributed around the circumference of the annular gap,
(e) elongating the cylinder ensemble (500) to the optical component (1, 1A, 2, 2A, 3, 4), a negative pressure being generated in the support tubes (300) and an overpressure being generated in the first ARE mother tube (200) so that the sheath tube (100) partially and the support tubes (300) at least partially collapse to form
• contact points (32) between the inner face (102) of the former sheath tube (100) and the outer face of the former first ARE mother tube (200) and
• arcuate anti-resonance elements of a first type (30), each of which, when viewed in cross-section in the direction of the longitudinal axis of the component, is arcuate having a left arc end and a right arc end and having a bulge in the direction of the hollow core (10), the arc ends being connected to the cladding inner face (23) at contact points (32) and spanning a curved area (31) together with the cladding inner face.

9. The method according to claim 8, **characterized in that**, in the cylinder ensemble (500) formed according to method step (d), at least four support tubes (300) are evenly distributed in the annular gap.

10. The method according to claim 8, **characterized in that**, in the cylinder ensemble (500) formed according to method step (d), at least eight support tubes (300) are arranged in pairs and the support tube pairs are evenly distributed in the annular gap.

11. The method according to one or more of the preceding claims 8 to 10, **characterized in that**, when forming the cylinder ensemble (500) according to method step (d), at least some of the support tubes (300) are fixed to the mother tube outer face and/or to the sheath tube inner face (102).

12. The method according to one or more of the preceding claims 8 to 11, **characterized in that** the anti-resonance element preforms provided according to method step (b) comprise a plurality of non-ferrous capillaries (400) having an outer diameter D_{Z}, where: D_{Z}<D_{S}<D_{M1}, and **in that**, in the cylinder ensemble (500) formed according to method step (d), the non-ferrous capillaries (400) are fixed to the sheath tube inner face (102) and are arranged in the annular gap between support tubes (300) and axially in parallel therewith, and when the cylinder ensemble (500) is elongated according to method step (e), an overpressure being generated in the non-ferrous capillaries (400) so that anti-resonance elements of a second type (40) are formed therefrom, which are nested with the anti-resonance elements of the first type (30) in such a way that, when viewed in cross-section in the direction of the longitudinal axis of the component, at least one anti-resonance element of the second type (40) is arranged inside the curved area.

13. The method according to one or more of the preceding claims 8 to 12, **characterized in that** the anti-resonance element preforms provided according to method step (b) comprise at least one second ARE mother tube (600) having an outer diameter D_{M2}, where: D_{S}<D_{M2}<D_{M1}, and, in the cylinder ensemble (500) formed according to method step (d), the second ARE mother tube (600) being arranged coaxially with the sheath tube (100) and with the first ARE mother tube (200), and a plurality of hollow support elements (300) being provided which are arranged and distributed axially in parallel in an annular gap between the first ARE mother tube (200) and the second ARE mother tube (600), and when the cylinder ensemble (500) is elongated according to method step (e), a negative pressure being generated in the hollow support elements (300) and an overpressure being generated in the second ARE mother tube (600) so that the hollow support elements (300) collapse to form
(a) contact points between the inner face of the former first ARE mother tube (200) and the outer face of the former second ARE mother tube (600) and
(b) arcuate anti-resonance elements of the first type (30).

## Revendications

1. Composant optique antirésonant (1, 1A, 2, 2A, 3, 4) qui présente un coeur creux (10) s'étendant le long d'un axe longitudinal de composant, une enveloppe (20) entourant le coeur creux (10), laquelle comporte une face intérieure (23) périphérique tournée vers le coeur creux (10), ainsi que des éléments d'antirésonance d'un premier type (30) qui, vus respectivement en coupe transversale en direction de l'axe longitudinal de composant, sont réalisés en forme d'arc comportant une extrémité d'arc gauche et comportant une extrémité d'arc droite et comportant un bombement en direction du coeur creux (10), dans lequel les extrémités d'arc sont reliées à la face intérieure (23) d'enveloppe en des points de contact (32) et définissent avec celle-ci une surface de bombement (31), **caractérisé en ce qu'**un deuxième type (40) d'éléments d'antirésonance est prévu, dans lequel des éléments d'antirésonance du deuxième type (40) sont imbriqués avec des éléments d'antirésonance du premier type (30) en ce sens que, vu en coupe transversale en direction de l'axe longitudinal de composant, respectivement au moins un élément d'antirésonance du deuxième type (40) est disposé à l'intérieur de la surface de bombement, et **en ce que** les éléments d'antirésonance imbriqués du deuxième type (40), vus en coupe transversale en direction de l'axe longitudinal de composant, sont respectivement réalisés de manière circulaire ou ovale.

2. Composant optique selon la revendication 1, **caractérisé en ce que** les éléments d'antirésonance imbriqués du deuxième type (40) sont respectivement reliés à la face intérieure (23) d'enveloppe.

3. Composant optique selon la revendication 1 ou 2, **caractérisé en ce que** les éléments d'antirésonance imbriqués du deuxième type (40) ne sont respectivement pas en contact avec l'élément d'antirésonance en forme d'arc du premier type (30).

4. Composant optique selon l'une ou plusieurs des revendications précédentes, **caractérisé en ce qu'**au moins quatre éléments d'antirésonance du premier type (30) sont répartis uniformément autour de la face intérieure (23) d'enveloppe, dans lequel les extrémités d'arc d'éléments d'antirésonance adjacents du premier type (30) sont en contact les unes avec les autres.

5. Composant optique selon l'une ou plusieurs des revendications précédentes 1 à 3, **caractérisé en ce qu'**au moins quatre éléments d'antirésonance du premier type (30) sont répartis uniformément autour de la face intérieure (23) d'enveloppe, dans lequel les extrémités d'arc d'éléments d'antirésonance adjacents du premier type (30) ne sont pas en contact les unes avec les autres.

6. Composant optique selon la revendication 5, **caractérisé en ce que** des éléments d'antirésonance d'un troisième type (50) sont prévus, dans lequel respectivement au moins un élément d'antirésonance du troisième type (50) est disposé entre des éléments d'antirésonance adjacents du premier type (30), lequel est relié aux éléments d'antirésonance adjacents du premier type (30) et à la face intérieure (23) d'enveloppe.

7. Composant optique selon l'une ou plusieurs des revendications précédentes, **caractérisé en ce que** les éléments d'antirésonance du premier type (30), vus en coupe transversale en direction de l'axe longitudinal de composant, sont réalisés sous la forme d'un arc extérieur (33b) et d'un arc intérieur imbriqué (33a) comportant respectivement une extrémité d'arc gauche et comportant une extrémité d'arc droite et comportant un bombement en direction du coeur creux (10), dans lequel respectivement les extrémités d'arc gauches de l'arc intérieur imbriqué (33a) et de l'arc extérieur (33b) et respectivement les extrémités d'arc droites de l'arc intérieur imbriqué (33a) et de l'arc extérieur (33b) sont reliées entre elles.

8. Procédé pour la fabrication d'un composant optique antirésonant (1, 1A, 2, 2A, 3, 4) qui présente un coeur creux (10) s'étendant le long d'un axe longitudinal de composant, une enveloppe (20) entourant le coeur creux (10), laquelle comporte une face intérieure (23) périphérique tournée vers le coeur creux (10), ainsi que des éléments d'antirésonance, comprenant les étapes de procédé suivantes :
(a) mise à disposition d'un tube de gainage (100) qui présente un alésage intérieur (101) de tube de gainage et un axe longitudinal de tube de gainage le long duquel s'étend une paroi (103) de tube de gainage délimitée par une face intérieure (102) et une face extérieure, dans lequel le tube de gainage (100) présente un diamètre intérieur d_{H},
(b) mise à disposition de préformes d'éléments d'antirésonance, comprenant au moins un premier tube mère d'élément d'antirésonance (tube mère ARE (200)) présentant un alésage intérieur (201) de tube mère et un axe longitudinal de tube mère le long duquel s'étend une paroi de tube mère délimitée par une face intérieure et une face extérieure, dans lequel le premier tube mère ARE (200) présente un diamètre extérieur D_{M1}, **caractérisé par** :
(c) la mise à disposition de tubes de support (300) comportant un diamètre extérieur Ds, dans lequel : D_{M1} + 2D_{S} ≤ dn est valable,
(d) la formation d'un ensemble de cylindres (500), comprenant le tube de gainage (100), le premier tube mère ARE (200) disposé de manière coaxiale à celui-ci et plusieurs tubes de support (300) disposés parallèlement à l'axe dans un espace annulaire entre le tube de gainage (100) et le premier tube mère ARE (200) et répartis autour de la circonférence de l'espace annulaire,
(e) l'allongement de l'ensemble de cylindres (500) pour former le composant optique (1, 1A, 2, 2A, 3, 4), dans lequel une dépression est générée dans les tubes de support (300) et une surpression est générée dans le premier tube mère ARE (200), de sorte que le tube de gainage (100) s'affaisse partiellement et les tubes de support (300) s'affaissent au moins partiellement en réalisant
• des points de contact (32) entre la face intérieure (102) de l'ancien tube de gainage (100) et la face extérieure de l'ancien premier tube mère ARE (200) et
• des éléments d'antirésonance en forme d'arc d'un premier type (30) qui, vus respectivement en coupe transversale en direction de l'axe longitudinal de composant, sont réalisés en forme d'arc comportant une extrémité d'arc gauche et comportant une extrémité d'arc droite et comportant un bombement en direction du coeur creux (10), dans lequel les extrémités d'arc sont reliées à la face intérieure (23) d'enveloppe en des points de contact (32) et définissent avec celle-ci une surface de bombement (31).

9. Procédé selon la revendication 8, **caractérisé en ce que**, dans l'ensemble de cylindres (500) formé selon l'étape de procédé (d), au moins quatre tubes de support (300) sont répartis uniformément dans l'espace annulaire.

10. Procédé selon la revendication 8, **caractérisé en ce que**, dans l'ensemble de cylindres (500) formé selon l'étape de procédé (d), au moins huit tubes de support (300) sont disposés par paires et les paires de tubes de support sont réparties uniformément dans l'espace annulaire.

11. Procédé selon l'une ou plusieurs des revendications précédentes 8 à 10, **caractérisé en ce que**, lors de la formation de l'ensemble de cylindres (500) selon l'étape de procédé (d), au moins une partie des tubes de support (300) est fixée sur la face extérieure de tube mère et/ou sur la face intérieure (102) de tube de gainage.

12. Procédé selon l'une ou plusieurs des revendications précédentes 8 à 11, **caractérisé en ce que** les préformes d'éléments d'antirésonance mises à disposition selon l'étape de procédé (b) comprennent plusieurs capillaires de NE (400) comportant un diamètre extérieur Dz, dans lequel : D_{Z} < D_{S} < D_{M1} est valable, et **en ce que**, dans l'ensemble de cylindres (500) formé selon l'étape de procédé (d), les capillaires de NE (400) sont fixés sur la face intérieure (102) de tube de gainage, et sont disposés dans l'espace annulaire entre des tubes de support (300) et parallèlement à l'axe de ceux-ci, et dans lequel une surpression est générée dans les capillaires de NE (400) lors de l'allongement de l'ensemble de cylindres (500) selon l'étape de procédé (e), de sorte qu'il en résulte la formation d'éléments d'antirésonance d'un deuxième type (40) qui sont imbriqués avec les éléments d'antirésonance du premier type (30) en ce sens que, vu en coupe transversale en direction de l'axe longitudinal de composant, respectivement au moins un élément d'antirésonance du deuxième type (40) est disposé à l'intérieur de la surface de bombement.

13. Procédé selon l'une ou plusieurs des revendications précédentes 8 à 12, **caractérisé en ce que** les préformes d'éléments d'antirésonance mises à disposition selon l'étape de procédé (b) comprennent au moins un second tube mère ARE (600) comportant un diamètre extérieur D_{M2}, dans lequel : D_{S} < D_{M2} < D_{M1} est valable, et dans lequel, dans l'ensemble de cylindres (500) formé selon l'étape de procédé (d), le second tube mère ARE (600) est disposé de manière coaxiale par rapport au tube de gainage (100) et au premier tube mère ARE (200), et dans lequel plusieurs éléments de support creux (300) disposés et répartis parallèlement à l'axe dans un espace annulaire entre le premier tube mère ARE (200) et le second tube mère ARE (600) sont prévus, et dans lequel, lors de l'allongement de l'ensemble de cylindres (500) selon l'étape de procédé (e), une dépression est générée dans les éléments de support creux (300) et une surpression est générée dans le second tube mère ARE (600), de sorte que les éléments de support creux (300) s'affaissent en réalisant
(a) des points de contact entre la face intérieure de l'ancien premier tube mère ARE (200) et la face extérieure de l'ancien second tube mère ARE (600) et
(b) des éléments d'antirésonance en forme d'arc du premier type (30).
